# EUROPÄISCHE PATENTSCHRIFT

(11) **EP 1 392 471 B1**
(45) Veröffentlichungstag und Bekanntmachung des Hinweises auf die Patenterteilung: **02.07.2008**
(21) Anmeldenummer: 02737841.3
(22) Anmeldetag: 17.05.2002
(51) Int. Cl.: B23Q 1/44, B25J 17/02

(54) **PRODUKTIONSMASCHINE**
PRODUCTION MACHINE
MACHINE DE PRODUCTION

(30) Priorität: 01.06.2001 DE 10126848
(43) Veröffentlichungstag der Anmeldung: 03.03.2004
(73) Patentinhaber: SIEMENS AKTIENGESELLSCHAFT, 80333 München (DE)
(72) Erfinder: HAMANN, Jens, 90765 Fürth (DE); LADRA, Uwe, 91056 Erlangen (DE); SCHÄFERS, Elmar, 90419 Nürnberg (DE)
(86) Internationale Anmeldenummer: PCT/DE2002/001782
(87) Internationale Veröffentlichungsnummer: WO 2002/098603

(56) Entgegenhaltungen:
- WO-A-99/28095
- CN-A- 1 246 400
- DE-A- 10 033 074
- US-A- 5 327 061
- US-A- 5 960 672
- US-B1- 6 402 444
- PATENT ABSTRACTS OF JAPAN vol. 1999, no. 09, 30. Juli 1999 (1999-07-30) & JP 11 090867 A (OLYMPUS OPTICAL CO LTD), 6. April 1999 (1999-04-06)

## Beschreibung

Die Erfindung bezieht sich auf eine Produktionsmaschine, auch Werkzeugmaschine oder Roboter, bei der ein Aggregat mittels einer von Verfahrachsen antreibbaren Parallelkinematikanordnung mit kraftaufnehmenden Stäben im Raum positionierbar ist, wobei in mindestens einem der Stäbe ein Linearaktor vorgesehen ist, dessen Bewegungsachse mit der jeweiligen Stabachse korrespondiert. Eine solche Maschine ist aus der CN-A-1 246 400 bekannt.

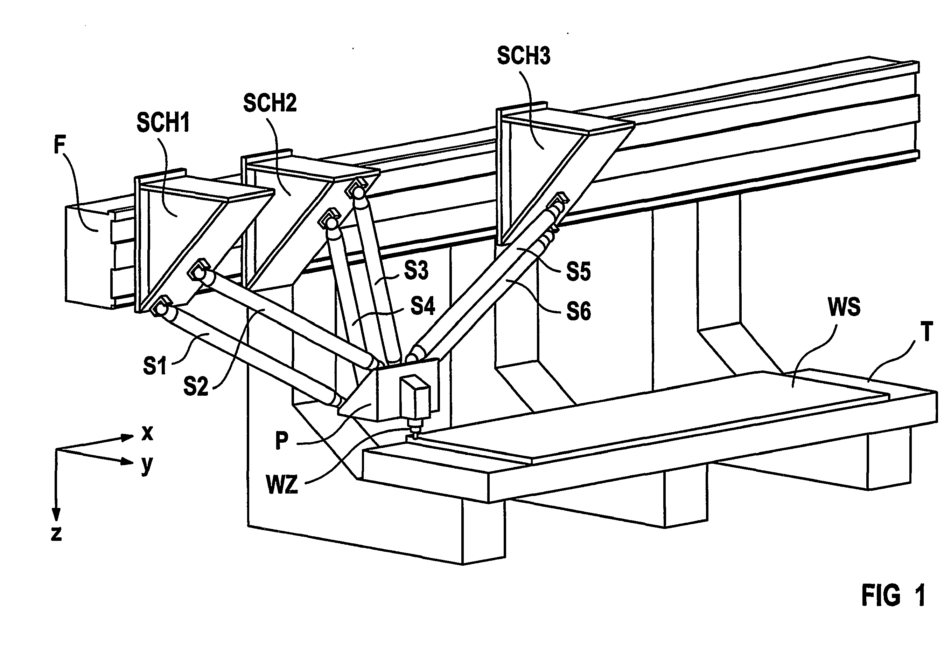

Typisch für das Prinzip der Parallelkinematik ist die Verwendung von Stäben, die sowohl für die Krafteinleitung zur Bewegung als auch zur Abstützung einer Plattform dienen. Handelsüblich ist beispielsweise ein Tripod, wie er im Zusammenhang mit FIG 1 noch ausführlich beschrieben wird. Bei einem solchen Tripod sind jeweils zwei Stäbe zueinander parallel angeordnet. Die Enden jedes Stabpaares sind jeweils mit einem Schlitten verbunden. Alle Schlitten werden entweder durch einen jeweils zugeordneten Linearmotor oder durch einen linear wirkenden Servomotor (Zahnstange und Ritzel) in x-Richtung bewegt. Somit können die insgesamt drei Motoren die drei Schlitten mit ihren jeweils zwei parallelen Stäben bewegen, indem die Schlitten auf einer einzigen gemeinsamen Achse verfahren werden. Dabei werden die Motoren so bewegt, dass die Plattform mit dem jeweils zugeordneten Werkzeug im gewünschten Arbeitsraum dreidimensional verfährt, ohne dass die Plattform kippen solle. Eine Parallelkinematikanordnung, bei der Doppelstäbe zum Einsatz kommen, ist aus der US-A- 5 960 67 bekannt.

Es hat sich jedoch gezeigt, dass bereits aufgrund von Gewichtskräften arbeitspunktabhängige Schiefstellung der Plattform erfolgen können. Dies liegt daran, dass die an der Bewegung beteiligten Stäbe unterschiedliche Kräfte aufnehmen müssen, die zu unterschiedlichen Dehnungen führen. Um eine Vorstellung von der Größenordnung der Lagefehler zu geben, sei darauf hingewiesen, dass ohne weiteres Verschiebungen von bis zu 100 µm an der Plattform möglich sind.

Bislang ist eine Kompensation dieser Verschiebungen nur durch eine Anpassung der Längen der beteiligten Stäbe für eine ausgesuchte Position im Arbeitsraum möglich. Bewegt sich die Plattform aus der Position heraus, ändert sich die Kraftverteilung in den Stäben und damit auch die zu kompensierende Dehnung. Da die Schiefstellung der Plattform für alle Arbeitspunkte unterschiedliche ist, lässt sich also die Struktur über die Anpassung der Stablängen definitiv nur für eine Position optimal einstellen. Andere Positionen im Arbeitsbereich werden dadurch wiederum indirekt beeinflusst, was sich negativ oder positiv auswirken kann. Ein solcher Optimierungsprozess erfolgt heutzutage manuell mit großem Aufwand, um die angesteuerte Position eines Verfahrzyklus der Plattform im Mittel optimal einzustellen.

Außer dem statischen Fehler ist aber auch noch mit Dynamik- und Lastfehlern zu rechnen, worauf im folgenden noch eingegangen wird.

Lagekorrekturen erfolgen mittels Linearaktoren, wobei dazu Piezoaktoren vorteilhaft einsetzbar sind (PATENT ABSTRACTS OF JAPAN vol. 1999, no. 09). Zur Istwerterfassung des Systems können Dehnungsmaßstreifen eingesetzt werden (US-A-5 327 061).

Aufgabe der Erfindung ist es, eine Produktionsmaschine der eingangs genannten Art so auszubilden, dass durch eine optimierte Stablängenkorrektur im gesamten Verfahrbereich optimale Verhältnisse erreicht werden.

Gemäß der Erfindung wird diese Aufgabe dadurch gelöst, dass als Aktor jeweils ein Piezoaktor vorgesehen ist, dass dem Piezoaktor jeweils ein entsprechend dem über Kraft- bzw. Längenmessmittel erfassbaren Kraft- bzw. Längenzustand im zugeordneten Stab ein Sollwert zur Stablängenkorrektur zugeleitet wird und dass die jeweiligen Piezoaktoren (PA1) in Messphasen als Kraft- oder Längenerfassungsmittel eingesetzt werden.

Dadurch, dass dem Aktor jeweils ein entsprechend der Position des Aggregats zugeordneter Sollwert zur statischen Stablängenkorrektur zuleitbar ist, kann der einfachste Fall einer Kompensation ohne Beschleunigung- und Lasteinwirkung beherrscht werden. Aber auch solche weitere Störgrößen lassen sich dadurch kompensieren, dass dem Aktor jeweils entsprechend der Beschleunigung des Aggregats ein zugeordneter Sollwert zur dynamischen Stablängenkorrektur zuleitbar ist oder dass dem Aktor jeweils entsprechend einer Lastwirkung am Aggregat ein zugeordneter Sollwert zur lastabhängigen Stablängenkorrektur zuleitbar ist.

Die Anzahl der möglichen Bewegungsfreiheitsgrade hängt von der verwendeten Parallelkinematik ab. Demzufolge ist es gemäß einer weiteren vorteilhaften Ausbildung der Erfindung vorgesehen, dass in so vielen Stäben jeweils ein Linearaktor vorgesehen ist, dass unter Zuhilfenahme einiger oder aller Verfahrachsen der Stäbe alle erforderlichen Bewegungsfreiheitsgrade beherrschbar sind. So ist es beispielsweise denkbar, dass bei drei Antrieben und drei Aktoren in jeweils einem Stab der Stabpaare eines Tripods dessen sechs mögliche Freiheitsgrade beherrscht werden. Selbstverständlich müssen dazu die beteiligten Motoren nicht nur die reine Bewegungsfunktion ausführen sondern auch Korrekturbewegungen mit ausführen.

Ein Ausführungsbeispiel der Erfindung ist in der Zeichnung dargestellt und wird im folgenden näher erläutert.

Die Darstellung gemäß FIG 1 zeigt einen Tripod mit drei Stabpaaren bestehend aus Stäben S1 und S2 bzw. S3 und S4 bzw. S5 und S6. Die Stäbe S1 und S2 sind an einem Schlitten SCH1 und an einer Plattform P befestigt. Die Stäbe S3 und S4 sind an einem Schlitten SCH2 und ebenfalls an der Plattform P befestigt. Die Stäbe S5 und S6 sind an einem Schlitten SCH3 und ebenfalls an der Plattform P angeschlagen. Die Plattform P ist im Ausführungsbeispiel Träger eines Werkzeugs WZ, das zur Bearbeitung eines Werkstückes WS dient, welches sich auf einem Tisch T befindet.

Die Schlitten SCH1, SCH2 und SCH3 verfahren in x-Richtung entlang einer Führung F. Die zugeordneten Antriebe sind in der Darstellung verdeckt. Wenn alle drei Schlitten SCH1, SCH2 und SCH3 ohne Relativbewegung zueinander verfahren werden, führt dies zu einer reinen Bewegung in x-Richtung. Sofern orthogonal dazu die y-Richtung oder die z-Richtung vom Werkzeug WZ angefahren werden soll, müssen die Schlitten SCH1 bis SCH3 relativ zueinander bewegt werden. Insoweit entspricht der Tripod dem Stand der Technik.

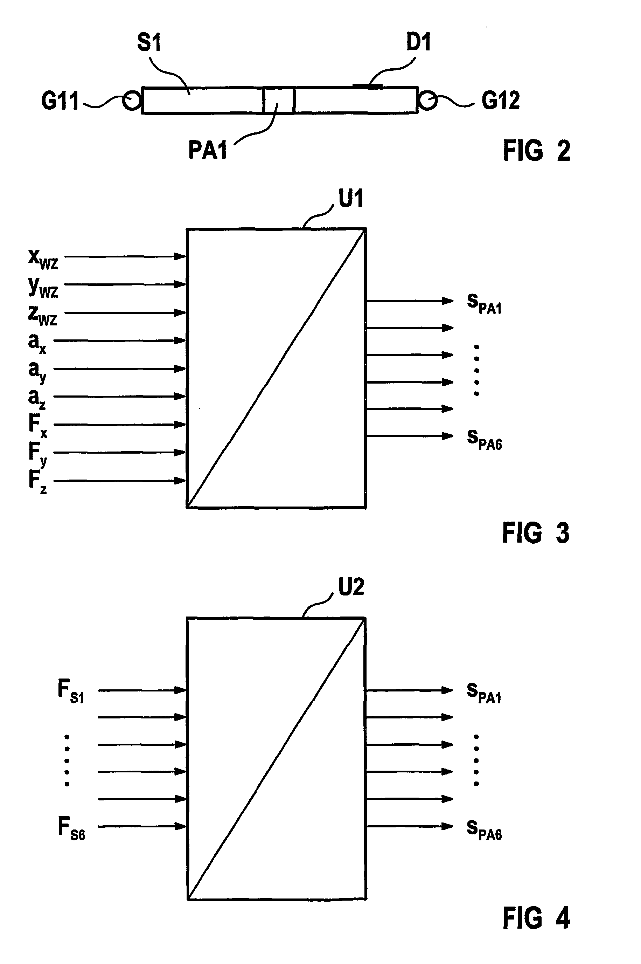

Wesentlich für die vorliegende Erfindung ist es nun, dass sich in den Stäben S1 bis S6 Piezoaktoren zur Stablängenkompensation befinden. Dies ist für den Stab S1 in der Darstellung gemäß FIG 2 durch den Piezoaktor PA1 angedeutet. In dieser Darstellung ist auch beidseitig des Stabes S1 das jeweils erforderliche Gelenk G11 bzw. G12 symbolhaft angedeutet und ferner ist ein Dehnungsstreifen D1 zur Auslängungs- bzw. Krafterfassung im Stab S1 durch einen waagerechten Strich angedeutet. Für die Stäbe S2 bis S6 wären Piezoaktoren PA2 bis PA6 entsprechend einsetzbar. Gleiches gilt für die Gelenke und Dehnungsmessstreifen.

In der Darstellung gemäß FIG 3 ist nun gezeigt, dass prinzipiell drei Eingangsgrößen für einen Umsetzer U1 Ansteuersignale für die Stablängenkorrektur aller möglichen Piezoaktoren erzeugen können. Die Stablängenkorrekturen sind als S_{PA1} bis S_{PA6} bezeichnet, da sie den Piezoaktoren PA1 bis PA6 der Stäbe S1 bis S6 zugeleitet werden sollen. Zur statischen Kompensation sind die vom Verfahrprogramm angestrebten Orte des Werkzeugs WZ als kartesische Orte x_{WZ}, y_{WZ} und z_{WZ} vorgesehen. Abhängig von diesen Sollpositionen kann dann der Umsetzer U1 eine statische Kompensation vornehmen.

Die Kompensationsgrößen können beispielsweise durch Berechnung oder in Form von aus Messungen vorgenommenen tabellarischen Zusammenhängen im Umsetzer U1 vorhanden sein.

Zusätzlich ist es auch möglich, die entsprechend den Beschleunigungen des Werkzeugs WZ, in den Achsen x, y und z, d.h. den Beschleunigungen aₓ, a_{y} und a_{z} auftretenden dynamischen Fehler vorzuhalten. Dies würde eine dynamische Kompensation ermöglichen. Auch ist eine Kompensation entsprechend der Kraft am Werkzeug, d.h. entsprechend den kartesischen Kräfte Fₓ, F_{y} und F_{z} in gleicher Weise möglich. Die Korrekturgrößen für das statische, das dynamische und das Kraftverhalten sind im Umsetzer U1 überlagerbar und führen zu entsprechenden Ausgangssignalen zur Stablängenkorrektur s_{PA1} bis s_{PA6} der Stäbe S1 bis S6.

Wenn jedoch nicht nur die entsprechend dem beabsichtigten Prozess zu erwartenden Informationen über Ort und Bewegung des Werkzeugs und über die vermutete Kraft am Werkzeug vorliegen, sondern zur Istgrößenerfassung vorliegt, ergibt sich ein weiterer erfinderische Ansatz. Die tatsächlichen Kräfte in den Stäben bzw. die bewirkten Ausdehnungen, die damit verbunden sind, werden wie dies in der Darstellung gemäß FIG 4 gezeigt ist, einem Umsetzer U2 zugeführt. Dabei dienen als Eingangsgrößen des Umsetzers U2 also Aussagen über die jeweilige Kraft im Stab d.h. über Kräfte F_{S1} bis F_{S6} für die Stäbe S1 bis S6. Als Ausgangsgrößen resultieren wiederum Stablängenkorrekturen s_{PA1} bis s_{PA6}. Die Kräfte in den Stäben S1 bis S6 können entweder durch Dehnungsmessstreifen ermittelt werden, wie dies in der Darstellung gemäß FIG 2 durch einen Dehnungsmessstreifen D1 symbolisiert war, jedoch ist es auch möglich, dass die Kraft durch die Piezoaktoren PA1 bis PA6 erfasst wird. Denkbar wäre dazu ein Einschleifen extrem kurzer Messintervalle in den eigentlichen Bewegungsprozess oder aber in konventioneller Manier eine Krafterfassung während abfahrbarer Messzyklen.

## Patentansprüche

1. Produktionsmaschine, auch Werkzeugmaschine oder Roboter, bei der ein Aggregat mittels einer von Verfahrachsen antreibbaren Parallelkinematikanordnung mit kraftaufnehmenden Stäben im Raum positionierbar ist, wobei in mindestens einem der Stäbe (S1-S6) ein Linearaktor (PA1) vorgesehen ist, dessen Bewegungsachse mit der jeweiligen Stabachse (S1) korrespondiert, **dadurch gekennzeichnet, dass** als Aktor jeweils ein Piezoaktor (PA1) vorgesehen ist, dass dem Piezoaktor jeweils ein entsprechend dem über Kraft- bzw. Längenmessmittel (PA1) erfassbaren Kraft- bzw. Längenzustand im zugeordneten Stab (S1-S6) ein Sollwert (S_{PA1}-S_{PA6}) zur Stablängenkorrektur zugeleitet wird und dass die jeweiligen Piezoaktoren (PA1) in Messphasen als Kraft- oder Längenerfassungsmittel eingesetzt werden.

2. Produktionsmaschine nach Anspruch 1, **dadurch gekennzeichnet, dass** dem Aktor (PA1) jeweils ein entsprechend der Position des Aggregats (WZ) zugeordneter Sollwert (x_{WZ}, Y_{WZ}, z_{WZ}) zur statischen Stablängenkorrektur zuleitbar ist.

3. Produktionsmaschine nach einem der vorstehenden Ansprüche, **dadurch gekennzeichnet, dass** dem Aktor (PA1) jeweils entsprechend der Beschleunigung des Aggregats (WZ) ein zugeordneter Sollwert (aₓ, a_{y}, a_{z}) zur dynamischen Stablängenkorrektur zuleitbar ist.

4. Produktionsmaschine nach einem der vorstehenden Ansprüche, **dadurch gekennzeichnet, dass** dem Aktor (PA1) jeweils entsprechend einer Lastwirkung am Aggregat (WZ) ein zugeordneter Sollwert (Fx,Fy,fz) zur lastabhängigen Stablängenkorrektur zuleitbar ist.

5. Produktionsmaschine nach einem der vorstehenden Ansprüche, **dadurch gekennzeichnet, dass** in so vielen Stäben (S1-S6) jeweils ein Linearaktor (PA1) vorgesehen ist, dass unter Zuhilfenahme einiger oder aller Verfahrachsen der Stäbe (S1-S6) alle erforderlichen Bewegungsfreiheitsgrade beherrschbar sind.

## Claims

1. A production machine, also a machine tool or a robot, in which an assembly is able to be positioned in space by means of a parallel kinematic arrangement with force-transfer rods able to be driven by travel axes, with a linear actuator being provided in at least one of the rods (S1-S6) with the axis of movement of said actuator corresponding to the axis of the respective rod (S1), **characterized in that** a piezoelectric actuator (PA1) is provided as the actuator in each case, that in each case a setpoint value (S_{PA1}-S_{PA6}) corresponding to the force or length status detectable via force or length measurement means (PA1) in the assigned rod (S1-S6) is supplied to the piezoactuator, and that the respective piezoactuators (PA1) are used in measurement phases as force or length detection means.

2. Production machine according to claim 1, **characterized in that** a setpoint value (X_{WZ}, Y_{WZ}, Z_{WZ}), assigned in each case according to the position of the assembly (WZ), is able to be supplied to the actuator (PA1) for static rod length correction.

3. Production machine according to one of the previous claims, **characterized in that** an assigned setpoint value (aₓ, a_{y}, a_{z}) in accordance with the acceleration of the assembly (WZ) is able to be supplied to the actuator (PA1) for dynamic rod length correction.

4. Production machine according to one of the previous claims, **characterized in that** an assigned setpoint value (Fₓ, F_{y}, F_{z}) in accordance with a load effect on the assembly (PA1) is able to be supplied to the actuator for load-dependent rod-length correction.

5. Production machine according to one of the previous claims, **characterized in that** a linear actuator (PA1) is provided in so many rods (S1-S6) in each case that, with the assistance of a few or of all of the travel axes of the rods (S1-S6), all necessary degrees of freedom can be controlled.

## Revendications

1. Machine de production, également machine-outil ou robot, suivant laquelle un équipement peut être positionné dans l'espace au moyen d'un système cinématique parallèle pouvant être entraîné par des axes de déplacement et doté de tiges recevant les forces, sachant qu'un actionneur (PA1) linéaire est prévu dans au moins une des tiges (S1-S6), actionneur dont l'axe de déplacement coïncide avec l'axe de la tige (S1) respective, **caractérisée en ce qu'**un actionneur (PA1) piézoélectrique respectif est prévu comme actionneur, **en ce qu'**une valeur (S_{PA1} - S_{PA6}) de consigne pour la correction de la longueur de la tige est respectivement apportée à l'actionneur piézoélectrique en fonction de la situation de force ou de longueur qui peut être détectée dans la tige (S1-S6) associée à l'aide de moyens (PA1) de mesure de force ou de longueur, et **en ce que** les actionneurs (PA1) piézoélectriques respectifs sont utilisés pendant les phases de mesure comme moyens de détection de force ou de longueur.

2. Machine de production suivant la revendication 1, **caractérisée en ce qu'**une valeur (x_{WZ}, y_{WZ}, z_{WZ}) de consigne associée pour la correction statique de la longueur de la tige peut être respectivement apportée à l'actionneur (PA1) en fonction de la position de l'équipement (WZ).

3. Machine de production suivant l'une des revendications précédentes, **caractérisée en ce qu'**une valeur (aₓ, a_{y}, a_{z}) de consigne associée pour la correction dynamique de la longueur de la tige peut être respectivement apportée à l'actionneur (PA1) en fonction de l'accélération de l'équipement (WZ).

4. Machine de production suivant l'une des revendications précédentes, **caractérisée en ce que** qu'une valeur (Fₓ, F_{y}, F_{z}) de consigne associée pour la correction de la longueur de la tige en fonction de la charge peut être respectivement apportée à l'actionneur (PA1) en fonction de la charge agissant sur l'équipement (WZ).

5. Machine de production suivant l'une des revendications précédentes, **caractérisée en ce qu'**un actionneur (PA1) linéaire respectif est prévu dans un nombre suffisant de tiges (S1-S6) pour que tous les degrés nécessaires de liberté de mouvement puissent être maîtrisés en faisant appel à certains ou à la totalité des axes de déplacement des tiges (S1-S6).
